(19) Europäisches Patentamt
European Patent Office
Office européen des brevets

(11) **EP 4 105 310 A1**

(12) **EUROPÄISCHE PATENTANMELDUNG**

(43) Veröffentlichungstag:
**21.12.2022  Patentblatt 2022/51**

(21) Anmeldenummer: **22163522.0**

(22) Anmeldetag: **22.03.2022**

(51) Internationale Patentklassifikation (IPC):
***C12C 7/22*** *(2006.01)*

(52) Gemeinsame Patentklassifikation (CPC):
**C12C 7/22**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **14.06.2021  DE 102021115304**

(71) Anmelder: **Ziemann Holvrieka GmbH**
**71636 Ludwigsburg (DE)**

(72) Erfinder:
• **KICHERER, Julian**
**70563 Stuttgart (DE)**
• **SCHAUFLER, Volker**
**73266 Bissingen-Teck (DE)**

(74) Vertreter: **Kuhnen & Wacker**
**Patent- und Rechtsanwaltsbüro PartG mbB**
**Prinz-Ludwig-Straße 40A**
**85354 Freising (DE)**

(54) **VERFAHREN UND VORRICHTUNG ZUM ERMITTELN EINER SOLL-TEMPERATUR EINER WÜRZE FÜR EINE THERMISCHE BEHANDLUNG DER WÜRZE IN EINER BRAUEREI UND ENTSPRECHENDE VERWENDUNG**

(57)  Erfindungsgemäß wird ein Verfahren zum Ermitteln einer Soll-Temperatur (TBmod) einer Würze (W) für eine thermische Behandlung der Würze (W) in einer Brauerei beansprucht, wenigstens mit den Schritten: (a) Erfassen eines Drucks (p) der Umgebungsluft der Brauerei oder der Luft im Sudhaus der Brauerei oder einer der Würze (W) überlagerten Gasphase (GW), wobei das Erfassen des Drucks (p) zu Beginn und/oder während der thermischen Behandlung der Würze (W) erfolgt; (b) Ermitteln einer Siedetemperatur (TB) von Wasser (A) oder der Würze (W) oder eines Modellstoffgemischs (M) in Abhängigkeit von dem in Schritt (a) erfassten Druck (p); und (c) Modifizieren der in Schritt (b) erhaltenen Siedetemperatur (TB) auf Basis einer vorbestimmten Funktion (Fmod), vorzugsweise eines Kennfelds oder einer Echtzeitberechnung, unter Berücksichtigung wenigstens eines Parameters (PW) der Würze (W) und/oder der thermischen Behandlung der Würze (W), vorzugsweise der Gesamtverdampfung, wodurch eine Soll-Temperatur (TBmod) der Würze (W) erhalten wird. Ferner werden eine Vorrichtung (V) zum Ermitteln einer Soll-Temperatur (TBmod) der Würze (W) für eine thermische Behandlung der Würze (W) in einer Brauerei und eine entsprechende Verwendung offenbart.

EP 4 105 310 A1

**Beschreibung**

Technisches Gebiet

Die vorliegende Erfindung stammt aus dem Gebiet der Gctränkeherstellung, insbesondere der Bierherstellung, und betrifft ein Verfahren zum Ermitteln einer Soll-Temperatur einer Würze für eine thermische Behandlung der Würze in einer Brauerei, eine Vorrichtung zum selben Zweck und eine entsprechende Verwendung.

Stand der Technik

In herkömmlichen Verfahren und Vorrichtungen zur thermischen Behandlung einer Würze in der Bierbrauerei werden die Temperatur und die Dauer der thermischen Behandlung der Würze in Abhängigkeit eines oder mehrerer technologischer Parameter, wie beispielsweise das Erreichen einer bestimmten Gesamtverdampfung des Würzesuds, eingestellt. Diese Einstellung erfolgt einmalig bei der Abnahme des Sudhauses oder wenn ein neues oder geändertes Braurezept erstmals eingesetzt wird. Dabei wird die Intensität der thermischen Behandlung, insbesondere die Temperatur der Würze während der thermischen Behandlung, so eingestellt, dass das vorgegebene technologische Ziel, wie beispielsweise das Erreichen einer Gesamtverdampfung von 4 %, unter allen Umständen erzielt wird. Dies bedeutet, dass die Dauer der thermischen Behandlung und vor allem die Temperatur der Würze während der thermischen Behandlung so eingestellt wurde, dass, um im Beispiel zu bleiben, die Gesamtverdampfung von 4 % auch bei Schwankungen bezüglich der Rohstoffqualität und des Wetters durch die einmalige Fixeinstellung der Temperatur der Würze bei der thermischen Behandlung in jedem Fall erreicht wird.

So wird herkömmlich grundsätzlich der höchste vorkommende Luftdruck für die Bestimmung der Würze-Solltemperatur am Auslauf des Kochers zugrunde gelegt, um auch bei diesem höchsten Luftdruck beispielsweise eine ausreichende Gesamtverdampfung von 4 % oder ein anderes technologisches Ziel zu erreichen. Wenn also der Luftdruck beispielsweise zwischen 980 und 1.030 mbar schwankt, würde im vorstehenden Beispiel die Würzetemperatur am Auslauf des Kochers auf beispielsweise 102 °C eingestellt, um bei dem Luftdruck von 1.030 mbar eine Gesamtverdampfung von 4,1 % zu erzielen. Durch diese Einstellung wird sichergestellt, dass auch bei allen anderen vorkommenden, geringeren Luftdrücken die Gesamtverdampfung von 4 % nicht unterschritten oder ein anderes technologisches Ziel erreicht wird.

Nachteilig an dieser Vorgehensweise ist jedoch, dass, wenn ein Sud bei einem geringeren Luftdruck durchgeführt wird, die Gesamtverdampfung aufgrund der fest eingestellten Soll-Temperatur der Würze oder des fix eingestellten Dampfverbrauchs während der thermischen Behandlung über der zu erzielenden Gesamtverdampfung liegt. Wenn im vorstehenden Beispiel die Würzetemperatur am Auslauf des Kochers auf beispielsweise 102 °C fest eingestellt ist, um bei einem Luftdruck von 1.030 mbar eine Gesamtverdampfung von 4,0 % zu erzielen, so liegt die Gesamtverdampfung bei der gleichen Temperaturbedingung und einem Luftdruck von 1.005 mbar bereits bei 5,3 % und bei 980 mbar sogar bei 6,7 %. Damit ist die Gesamtverdampfung des jeweiligen Sudes in Abhängigkeit vom momentanen Luftdruck bei den genannten Drücken um ca. 33 % oder sogar um fast 70 % über der technologisch geforderten und damit ausreichenden Gesamtverdampfung von 4,0 %. Die nachfolgende Tabelle gibt beispielhaft die vorstehend beschriebene Problematik der unterschiedlichen Gesamtverdampfung des unterschiedlichen Wärmeverbrauchs bei einer fest eingestellten Soll-Temperatur der Würze und unterschiedlichen Drücken der Umgebungsluft während der thermischen Behandlung der Würze in der Brauerei wieder:

| eingestellte Temperatur der Würze am Kocherausgang | Druck p der Umgebungsluft der Brauerei | Gesamtverdampfung pro Sud (Soll: 4,0 %) | Wärmeverbrauch gegenüber der Soll-Gesamtverdampfung von 4,0 % |
|---|---|---|---|
| 102 °C | 1.030 mbar | 4,0 % | 100% |
| 102 °C | 1.005 mbar | 5,3 % | 133 % (+ 33 %) |
| 102 °C | 980 mbar | 6,7 % | 168 % (+ 68 %) |

Mit der überschüssigen Gesamtverdampfung sind ein entsprechend hoher Energieverbrauch und zusätzlich auch ein erhöhter Wasserverbrauch verbunden. Im vorstehenden Beispiel bedeutet dies für einen Sud bei 918 mbar ein Energieeinsparpotenzial von knapp 70 % der für die thermische Behandlung aufzubringende Energie und ein Wassereinsparpotenzial von etwa 2,6 % bezogen auf das Sudvolumen.

Darüber hinaus treten bei der herkömmlichen Verfahrensweise weitere Probleme auf, die auf die Schwankung des Umgebungsluftdrucks zurückzuführen sind: So schwankt der Bedarf an Dampf von Sud zu Sud und muss in unterschiedlichen Mengen bereitgestellt werden, obwohl eigentlich dieselbe Gesamtverdampfung angestrebt wird und folglich der Dampfverbrauch für jeden Sud auch konstant sein sollte.

Ein weiterer Nachteil ist, dass bei Extremwetterlagen die zurückzugewinnende Wärmemenge stark schwankt: So kann bei extrem geringem Luftdruck die rückgewonnene Wärmemenge so hoch sein, dass das Wärmerückgewinnungssystem, insbesondere der Pfannendunstkondensator, überlastet wird, d.h. die Rückgewinnung nicht mehr effizient funktioniert. Zudem besteht die Gefahr, dass der Energiespeicher die anfallende Wärmemenge nicht mehr aufnehmen kann und überläuft. Hierbei kann es auch dazu kommen, dass das Wasserschloss des Pfannendunstkondensators dem Druck nicht mehr standhalten kann und nicht den gesamten Arbeitsbereich abdecken kann.

Umgekehrt kann es bei einem extrem hohen Luftdruck sein, dass das Wärmerückgewinnungssystem zusammenbricht, da der Energiespeicher für die nachfolgenden Sude nicht mehr ausreichend gefüllt wird. In beiden Fällen kommt es jedenfalls zu einer Verschlechterung des energetischen Wirkungsgrades. Darüber hinaus schwanken die Energie- und Wasserverbräuche im Sudhaus nachteilig in Abhängigkeit von der Wetterlage.

Aufgabe der Erfindung

Daher ist es eine Aufgabe der vorliegenden Erfindung, ein verbessertes Verfahren zum Ermitteln einer Soll-Temperatur einer Würze für eine thermische Behandlung der Würze in einer Brauerei bereitzustellen. Insbesondere soll mit dem erfindungsgemäßen Verfahren Energie während der thermischen Behandlung der Würze gegenüber herkömmlichen Verfahren eingespart werden. Vorzugsweise soll auch der Wasserverbrauch pro Sud gesenkt werden. Eine weitere Aufgabe der vorliegenden Erfindung ist, eine Vorrichtung zum selben Zweck und eine entsprechende Verwendung bereitzustellen.

Definitionen

Erfindungsgemäß bedeutet der Begriff "Kochen" der Würze ein blasenbildendes oder sprudelndes Kochen bzw. Sieden der Würze bei der Koch- bzw. Siedetemperatur.

Entsprechend bedeutet der Begriff "Kochtemperatur" der Würze erfindungsgemäß die Temperatur oder der Temperaturbereich, bei welcher bzw. in welchem die Würze ein blasenbildendes oder sprudelndes Kochen/Sieden zeigt. Die Kochtemperatur hängt von der Zusammensetzung der Würze und insbesondere von dem an der Würze anliegenden Druck ab. Beispiele für die Kochtemperatur sind 100 °C oder ein Bereich von 98 bis 102 °C.

Erfindungsgemäß bedeutet ein "Heißhalten" der Würze ein Halten der Temperatur der Würze zwischen der Kochtemperatur und 8 °C unterhalb der Kochtemperatur, vorzugsweise zwischen der Kochtemperatur und 6 °C unterhalb der Kochtemperatur, insbesondere zwischen der Kochtemperatur und 4 °C unterhalb der Kochtemperatur.

Entsprechend umfasst der Begriff "Heißhaltetemperatur" der Würze erfindungsgemäß einen Temperaturbereich zwischen der Kochtemperatur und 8 °C unterhalb der Kochtemperatur, vorzugsweise zwischen der Kochtemperatur und 6 °C unterhalb der Kochtemperatur, insbesondere zwischen der Kochtemperatur und 4 °C unterhalb der Kochtemperatur. Beispiele für die Heißhaltetemperatur sind die Temperaturbereiche 92 bis 100 °C, 94 bis 100 °C oder 96 bis 100 °C.

Erfindungsgemäß wird unter dem Begriff "thermisches Behandeln" der Würze ein Kochen oder Heißhalten der Würze wie vorstehend definiert verstanden.

Erfindungsgemäß wird unter dem Begriff "zu Beginn der thermischen Behandlung der Würze" ein Zeitraum verstanden, der zwischen einem den nachfolgenden Zeitpunkten liegt:

- 30 Minuten vor dem Zeitpunkt des Erreichens der Kochtemperatur oder der Heißhaltetemperatur bis 10 Minuten nach diesem Zeitpunkt;
- vorzugsweise 20 Minuten vor dem Zeitpunkt des Erreichens der Kochtemperatur oder der Heißhaltetemperatur bis 5 Minuten nach diesem Zeitpunkt;
- vorzugsweise 10 Minuten vor dem Zeitpunkt des Erreichens der Kochtemperatur oder der Heißhaltetemperatur bis zum Zeitpunkt des Erreichens der Kochtemperatur oder der Heißhaltetemperatur;
- vorzugsweise 5 Minuten vor dem Zeitpunkt des Erreichens der Kochtemperatur oder der Heißhaltetemperatur bis zum Zeitpunkt des Erreichens der Kochtemperatur oder der Heißhaltetemperatur; oder
- insbesondere 2 Minuten vor dem Zeitpunkt des Erreichens der Kochtemperatur oder der Heißhaltetemperatur bis zum Zeitpunkt des Erreichens der Kochtemperatur oder der Heißhaltetemperatur.

Erfindungsgemäß wird unter dem Begriff "Wärmeüberträger" eine Vorrichtung verstanden, die zum Übertragen von Wärme von einem Medium, z.B. ein Wärmeträger, auf ein anderes, z.B. eine Würze, geeignet ist. Beispiele hierfür sind: Plattenwärmeüberträger, Röhrenwärmeüberträger und Wand- oder Bodenheizung eines Gefäßes.

Die in dieser Anmeldung genannten Meßparameter werden nach den dem Fachmann bekannten Messverfahren bestimmt, insbesondere nach den Standards von der MEBAK oder EBC veröffentlichten Analyseverfahren, besonders MEBAK, Würze Bier Biermischgetränke, Band II, 15. Februar 2012, Kapitel 2 "Würze und Bier", sofern nachfolgend nicht näher spezifiziert.

Erfindungsgemäß wird unter dem Begriff "DMS" Dimethylsulfid verstanden, dessen Konzentration in der Würze mit der Methode MEBAK Brautechnische Analysenmethoden, Würze Bier Biermischgetränke, Band II, 15. Februar 2012, Kapitel 2.23.1.1, bestimmt wird.

Erfindungsgemäß wird unter dem Begriff "DMS-P" eine Vorstufe oder mehrere Vorstufen von Dimethylsulfid verstanden, dessen/deren Konzentration in der Würze mit der Methode MEBAK Brautechnische Analysenmethoden, Würze Bier Biermischgetränke, Band II, 15. Februar 2012, Kapitel 2.23.1.2, bestimmt wird.

Erfindungsgemäß wird eine Konzentration von koagulierbarem Stickstoff (Nkoag) in der Würze mit der Methode MEBAK Brautechnische Analysenmethoden, Würze Bier Biermischgetränke, Band II, 15. Februar 2012, Kapitel 2.6.2, bestimmt.

Erfindungsgemäß werden die Hopfenöle in der Würze mit der Methode MEBAK Rohstoffe/Rohstoffe Rohrfrucht Gerste Malz Hopfen und Hopfenprodukte, 2016, Methode R-300.06.032 [2016-03], Seiten 353ff, bestimmt.

Erfindungsgemäß werden die in der Würze mit der Methode MEBAK Rohstoffe/Rohstoffe, Rohrfrucht, Gerste, Malz, Hopfen und Hopfenprodukte, 2016, Methode R-300.07.151 [2016-03], Seiten 355ff, bestimmt.

Erfindungsgemäß wird eine Konzentration der $\alpha$-Säuren und der $\beta$-Säuren in der Würze mit der Methode MEBAK Brautechnische Analysenmethoden, Würze Bier Biermischgetränke, Band II, 15. Februar 2012, Kapitel 2.17.3, bestimmt.

Erfindungsgemäß wird eine Konzentration der Iso-$\alpha$-Säuren in der Würze mit der Methode MEBAK Brautechnische Analysenmethoden, Würze Bier Biermischgetränke, Band II, 15. Februar 2012, Kapitel 2.17.2, bestimmt.

Erfindungsgemäß werden die Bittereinheiten der Würze nach EBC mit der Methode MEBAK Brautechnische Analysenmethoden, Würze Bier Biermischgetränke, Band II, 15. Februar 2012, Kapitel 2.17.1, bestimmt.

Erfindungsgemäß wird eine Farbe der Würze mit der Methode MEBAK Brautechnische Analysenmethoden, Würze Bier Biermischgetränke, Band II, 15. Februar 2012, Kapitel 2.12.2, bestimmt.

Erfindungsgemäß wird unter dem Begriff "TBZ" die Thiobarbitursäurezahl verstanden, welche in der Würze mit der Methode MEBAK Brautechnische Analysenmethoden, Würze Bier Biermischgetränke, Band II, 15. Februar 2012, Kapitel 2.4, bestimmt wird.

Erfindungsgemäß wird eine kinematische Viskosität der Würze mit der Methode MEBAK Wort, Beer, Beer-based Beverages, Januar 2013, Kapitel 2.25.1 oder 2.25.2 oder 2.25.3, bestimmt.

Erfindungsgemäß wird ein pH-Wert der Würze mit der Methode MEBAK Brautechnische Analysenmethoden, Würze Bier Biermischgetränke, Band II, 15. Februar 2012, Kapitel 2.13, bestimmt.

Erfindungsgemäß wird eine Konzentration von gesamtlöslichem Stickstoff in der Würze mit der Methode MEBAK Brautechnische Analysenmethoden, Würze Bier Biermischgetränke, Band II, 2002, Kapitel 2.8.1.1 oder 2.8.1.2, bestimmt.

Erfindungsgemäß wird ein Stammwürzegehalt der Würze mit der Methode MEBAK Brautechnische Analysenmethoden, Würze Bier Biermischgetränke, Band II, 15. Februar 2012, Kapitel 2.9.2.3 (Biegeschwinger), bestimmt.

Erfindungsgemäß wird eine Leitfähigkeit der Würze mit den üblichen, dem Fachmann bekannten Methoden gemessen, vorzugsweise mit einem Mikroprozessor-Konduktometer mit 4-Elektroden-Leitfähigkeitsmeßstelle, beispielweise zur Verfügug gestellt von der Fa. Xylem Analytics Germany Sales GmbH & Co. KG (WTW), Weilheim/Deutschland.

Erfindungsgemäß wird eine Konzentration von freiem Amino-Stickstoff (FAN) in der Würze mit der Methode MEBAK Brautechnische Analysenmethoden, Würze Bier Biermischgetränke, Band II, 15. Februar 2012, Kapitel 2.6.4.1, bestimmt.

Erfindungsgemäß wird eine Konzentration von Feststoffen in der Würze mit der Methode MEBAK Brautechnische Analysenmethoden, Würze Bier Biermischgetränke, Band II, 15. Februar 2012, Kapitel 1.6.1, bestimmt.

Erfindungsgemäß wird die Trübung der Würze mittels Streulichtmessung mit einem Detektionswinkel von 11 ° bis 25 °, vorzugsweise 11 °, 12 ° oder 25 °, insbesondere 25 °, bei 620 nm $\leq \lambda \leq$ 680 nm, vorzugsweise bei $\lambda$ = 650 nm, gemessen und in der Einheit [EBC] angegeben. Die Messung der Trübung erfolgt bevorzugt gemäß der Methode MEBAK Brautechnische Analysenmethoden, Würze Bier Biermischgetränke, Band II, 15. Februar 2012, Kapitel 1.3.

Erfindungsgemäß wird eine Konzentration von Polyphenolen in der Würze mit der Methode MEBAK Brautechnische Analysenmethoden, Würze Bier Biermischgetränke, Band II, 15. Februar 2012, Kapitel 2.16.1, bestimmt.

Erfindungsgemäß wird eine Konzentration von Eiweiß in der Würze mittels des Gesamtstickstoffs in der Würze, gemessen mit der Methode MEBAK Brautechnische Analysenmethoden, Würze Bier Biermischgetränke, Band II, 15. Februar 2012, Kapitel 2.6.1, bestimmt.

Erfindungsgemäß wird eine Konzentration von Anthocyanogenen in der Würze mit der Methode MEBAK Brautechnische Analysenmethoden, Würze Bier Biermischgetränke, Band II, 15. Februar 2012, Kapitel 2.16.2, bestimmt.

Erfindungsgemäß wird der Iodwert in der Würze mit der Methode MEBAK Brautechnische Analysenmethoden, Würze Bier Biermischgetränke, Band II, 15. Februar 2012, Kapitel 2.3, bestimmt.

Kurzfassung der Erfindung

Die vorstehend genannte Aufgabe wird durch die Gegenstände der unabhängigen Ansprüche gelöst. Vorteilhafte Ausführungsformen der Erfindung sind Gegenstand der abhängigen Ansprüche.

Erfindungsgemäß wird ein Verfahren zum Ermitteln einer Soll-Temperatur TBmod einer Würze W für eine thermische Behandlung der Würze W in einer Brauerei beansprucht, wenigstens mit den Schritten:

(a) Erfassen eines Drucks p der Umgebungsluft der Brauerei oder der Luft im Sudhaus der Brauerei oder einer der Würze W überlagerten Gasphase GW, wobei das Erfassen des Drucks p zu Beginn und/oder während der thermischen Behandlung der Würze W erfolgt;
(b) Ermitteln einer Siedetemperatur TB von Wasser A oder der Würze W oder eines Modellstoffgemischs M in Abhängigkeit von dem in Schritt (a) erfassten Druck p; und
(c) Modifizieren der in Schritt (b) erhaltenen Siedetemperatur TB auf Basis einer vorbestimmten Funktion Fmod, vorzugsweise eines Kennfelds oder einer Echtzeitberechnung, unter Berücksichtigung wenigstens eines Parameters PW der Würze W und/oder der thermischen Behandlung der Würze W, vorzugsweise der Gesamtverdampfung, wodurch eine Soll-Temperatur TBmod der Würze W erhalten wird.

Der vorliegenden Erfindung liegt die Erkenntnis zugrunde, dass sich bei den Vorgängen der Ausdampfung von Stoffen aus der Würze W bestimmte Parameter, welche einen Einfluss auf die Ausdampfung haben, beispielsweise durch den anliegenden Druck oder die herrschende Temperatur der Würze beeinflussen lassen, andere Parameter jedoch nicht. So hat die Temperatur beispielsweise einen Einfluss auf den Sattdampfdruck eines bestimmten, in der Würze gelösten Stoffs, auf dessen Fugazitätskoeffizienten in der Flüssigphase, auf dessen Fugazitätskoeffizienten in der Gasphase und auf den Druckkorrekturfaktor vom Sattdampfdruck dieses Stoffs zum Gesamtdruck. Ferner hat der Gesamtdruck beispielsweise einen Einfluss auf den Fugazitätskoeffizienten des in der Würze gelösten Stoffs in der Flüssigphase, auf den Fugazitätskoeffizienten desselben in der Gasphase und den Druckkorrekturfaktor vom Sattdampfdruck zum Gesamtdruck. Die genannten Parameter sind über den sog. $\varphi$-$\gamma$-Ansatz für den Stoff i zusammengefaßt:

$$x_i^L * p_i^{sat} * \varphi_i^L * \gamma_i * \pi_i^{L,rein} = x_i^v * p_{ges} * \varphi_i^v$$

Dabei sind:

$x_i^L$ = Konzentration Stoff i in der Flüssigphase

$p_i^{sat}$ = Sattdampfdruck von Stoff i

$\varphi_i^L$ = Fugazitätskoeffizient Stoff i in der Flüssigphase

$\gamma_i$ = Aktivitätskoeffizient (Flüchtigkeit)

$\pi_i^{L,rein}$ = Druckkorrektur $p_i^{sat}$ zu $p_{ges}$

$x_i^v$ = Konzentration Stoff i in der Gasphase

$p_{ges}$ = gesamt / Systemdruck

$\varphi_i^v$ = Fugazitätskoeffizient Stoff i in der Gasphase

Nach dem erfindungsgemäßen Verfahren wird die Siedetemperatur TB der Würze W, von Wasser A oder des Modellstoffgemischs M wenigstens einmal für jeden Sud zu Beginn der thermischen Behandlung der Würze W oder wenigstens einmal während dieser Behandlung bestimmt. Dabei wird die Siedetemperatur TB in Abhängigkeit von dem aktuell herrschenden Druck p der unmittelbaren Umgebung der Würze W, also der Gasphase, welche der Würze W überlagert ist, oder von der weiteren Umgebung der Würze W, also der Luft im Sudhaus oder sogar der Umgebungsluft der Brauerei, bestimmt. In zeitlicher Hinsicht wird die Siedetemperatur TB in Bezug auf die unmittelbar vor und/oder während der thermischen Behandlung herrschenden Druckverhältnisse der Umgebung bestimmt. Damit kann die Verdampfung eines oder mehrerer Würzebestandteile durch die Berücksichtigung des äußeren Drucks und die dementsprechende Einstellung der Siedetemperatur TB gezielt beeinflusst und gesteuert werden.

Nach der vorliegenden Erfindung kommen als Medien bei der Bestimmung der Siedetemperatur TB der Würze W das Wasser A, die Würze W oder ein Modellstoffgemisch M infrage. Dabei stellt das Wasser A das am einfachsten zu berechnende System und ein geeignetes Modell für eine Würze gerade bezüglich des Ausdampfverhaltens bei der thermischen Behandlung dar. Beim Modellstoffgemisch M handelt es sich vorzugsweise um eine wässrige, Lösung eines Modellstoffs, beispielsweise eines Aromastoffs, z.B. DMS oder Linalool, in geringer, würze- oder biertypischer Konzentration. Um das Modellstoffgemisch M der Würze W bezüglich seines Verhaltens und seiner Eigenschaften anzunähern, kann es vorzugsweise zuckerhaltig sein, wobei sich sein Zuckergehalt sich am Zucker- oder Extraktgehalt der Würze orientieren kann.

Das Modellstoffgemisch M wird erfindungsgemäß dann vorteilhaft eingesetzt werden, wenn speziell das Verhalten, wie beispielsweise das Ausdampfverhalten, des Modellstoffs betrachtet werden soll und der Modellstoff oder dessen Konzentrationsänderung im Gemisch und damit letztlich in der Würze W ein technologisch relevanter Parameter ist oder einen technologisch relevanten Parameter beeinflusst. So kann beispielsweise als das Modellstoffgemisch M eine wässrige DMS-Lösung betrachtet werden, wobei der technologische Parameter die Erzielung einer bestimmten Konzentrationsabnahme bei der thermischen Behandlung des Modellstoffgemischs M ist. Je ähnlicher die Zusammensetzung des Modellstoffgemischs M der Würze W ist, desto genauer stimmen die Stoffdaten des Modellstoffgemischs M mit denen der Würze W überein.

Die Stoffdaten des Modellstoffgemischs M, wie beispielsweise die Wärmekapazität cp, die innere Energie U und die Enthalpie h, können - falls nicht der Fachliteratur entnehmbar - über die Massenanteile der jeweiligen Bestandteile unter Annahme von idealen Stoffen und einer idealen Mischung schätzungsweise ermittelt werden, wobei zwischenmolekulare Wechselwirkungen vernachlässigt werden:

$$cp_{m\_ges} = \sum_{i=0}^{n} w_i * cp_i$$

$$h_{m\_ges} = \sum_{i=0}^{n} w_i * h_i$$

$$f(p,T)$$

$$\Delta h_{mix}^{lv} = \sum_{i=0}^{n} x_i^v * \Delta h_i^{lv}$$

$$f(p,T)$$

$$m_{mix}^{lv} = \frac{\Delta u_{mix}}{\Delta h_{mix}^{lv}} \quad \left[\frac{kg}{kg_{mix}}\right]$$

**φ- γ-Ansatz für einen Stoff i**

$$x_i^L * p_i^{sat} * \varphi_i^L * \gamma_i * \pi_i^{L,rein} = x_i^v * p_{ges} * \varphi_i^v$$

$$f(T)$$

$$f(p,T)$$

Für den betrachteten Stoff i kann über den φ-γ-Ansatz und die nachfolgenden Formeln die Änderung der Enthalpie $(= \Delta h_{mix}^{lv})$ und der inneren Energie $(= \Delta u_{mix})$ des Modellstoffgemischs M berechnet werden, woraus letztlich die Masse $(= m_{mix}^{lv})$ des Modellstoffgemischs M resultiert, welche bei der thermischen Behandlung einen Phasenwechsel vollzieht. Anders ausgedrückt kann durch den während der thermischen Behandlung erzielten Phasenwechsel des Modellstoffgemischs M und die Beeinflussung weiterer Parameter in Abhängigkeit vom Druck und/oder der Temperatur (f(p,T); f(T), wie sie in der nachfolgenden Übersicht angegeben sind, letztlich die Konzentration des betrachteten Stoffes i in der flüssigen Phase $(= x_i^L)$ eingestellt bzw. verändert werden.

Die vorliegende Erfindung macht sich die vorstehend dargestellten thermodynamischen Zusammenhänge zu Nutze, um die thermische Behandlung der Würze W zu optimieren, d.h., dass oder die technologischen Ziele (beispielsweise die Ausdampfung eines bestimmten Stoffes i aus der flüssigen Phase, also der Würze W, bis zu einem erwünschten Grad) mit dem geringstmöglichen Einsatz von Wärmeenergie zu erreichen. Nachfolgend die einzelnen Schritte des erfindungsgemäßen Verfahrens an einem Beispiel erklärt.

Die nachfolgende Tabelle gibt beispielhafte Werte für den Luftdruck p in der Umgebung der Brauerei und die Siedetemperatur TB von Wasser beim zugehörigen Umgebungsluftdruck wieder:

| Druck p der Umgebungsluft der Brauerei | Siedetemperatur TB von Wasser A oder Würze W beim Druck p |
| --- | --- |
| 1.030 mbar | 100,45 °C |
| 1.005 mbar | 99,74 °C |
| 980 mbar | 99,00 °C |
| Erfassung p in Schritt (a) | Ermittlung TB in Schritt (b) |

Nach der Erfassung des Drucks p beispielsweise der Umgebungsluft der Brauerei (Schritt (a)) wird in Schritt (b) die aktuell geltende Siedetemperatur TB, hier beispielsweise der Würze W, ermittelt.

Anschließend wird in Schritt (c) des erfindungsgemäßen Verfahrens in Abhängigkeit von einem oder mehreren technologischen Parametern, die vorab bestimmt und in Gestalt einer Funktion Fmod festgelegt werden, die Siedetemperatur TB aus Schritt (b) modifiziert, um die Soll-Temperatur TBmod der Würze W zu erhalten. Bei dieser Modifizierung der Siedetemperatur TB kann beispielsweise eine bestimmte, bei der thermischen Behandlung der Würze W zu erzielende Gesamtverdampfung oder Restverdampfung der Würze oder die Ausdampfung eines unerwünschten Aromastoffs aus der Würze W berücksichtigt werden. Dabei kann erfindungsgemäß die vorbestimmte Funktion Fmod einen oder mehrere technologische Parameter berücksichtigen, je nachdem, welchen Zweck der Anwender des Verfahrens verfolgt.

| Modifizieren der Siedetemperatur TB in Abhängigkeit der vorbestimmten Funktion Fmod | | Erhalt der Soll-Temperatur TBmod der Würze W |
| --- | --- | --- |
| 100,45 °C | + X$_1$ | → (100, 45 + X$_1$) °C |
| 99,74 °C | + X$_2$ | → (99,74 + X$_2$) °C |
| 99,00 °C | + X$_3$ | → (99,00 + X$_3$) °C |
| Modifizieren TB und Erhalt der Soll-Temperatur TBmod in Schritt (c) | | |

Dabei kann die vorbestimmte Funktion Fmod im Rahmen des erfindungsgemäßen Verfahrens vorab einmal bestimmt und dann beispielsweise in Gestalt einer Kennfeld-Matrix festgelegt werden. Dabei kann eine derartige Kennfeld-Matrix Modifizierungswerte für unterschiedliche Drücken p, aber auch für andere technologische Parameter, wie beispielsweise unterschiedliche Gesamtverdampfungen oder Konzentrationen eines bestimmten Stoffes in der Würze W enthalten. Folglich ist erfindungsgemäß auch der Einsatz mehrdimensionaler Kennfeld-Matrices vorgesehen.

Die nachfolgende Tabelle gibt ein Beispiel für ein zweidimensionales Kennfeld wieder, welches die der Funktion Fmod zugehörigen Modifizierungsgrößen Xi,j Abhängigkeit des Parameters "Gesamtverdampfung" (Dimension i) und des Drucks p (Dimension j) darstellt:

| Druck p der Umgebungsluft der Brauerei ↓ | angestrebte Gesamtverdampfung pro Sud ↓ | | |
|---|---|---|---|
| | 4% | 5% | 6% |
| 970 mbar | $X_{4,1}$ | $X_{5,1}$ | $X_{6,1}$ |
| 980 mbar | $X_{4,2}$ | $X_{5,2}$ | $X_{6,2}$ |
| 990 mbar | $X_{4,3}$ | $X_{5,3}$ | $X_{6,3}$ |
| 1.000 mbar | $X_{4,4}$ | $X_{5,4}$ | $X_{6,4}$ |
| 1.010 mbar | $X_{4,5}$ | $X_{5,5}$ | $X_{6,5}$ |
| 1.020 mbar | $X_{4,6}$ | $X_{5,6}$ | $X_{6,6}$ |
| 1.030 mbar | $X_{4,7}$ | $X_{5,7}$ | $X_{6,7}$ |
| | ↑ Modifizierungsfunktion Fmod $X_{i,j}$ | | |

In einer anderen, beispielhaften Ausführungsform des erfindungsgemäßen Verfahrens wird die Siedetemperatur TB wie vorstehend beschrieben bestimmt und in Abhängigkeit von dem zu erzielenden Ausdampfungsgrad eines unerwünschten Würzebestandteils, wie beispielsweise Dimethylsulfid (DMS), modifiziert, um die zum Erreichen dieses technologischen Ziels entsprechende Soll-Temperatur TBmod zu bestimmen. Im Gegensatz dazu konnte herkömmlich beispielsweise eine definierte Ausdampfung eines bestimmten Würzeparameters bei einer fest vorgegebenen Kocher-Austrittstemperatur der Würze oder einer konstant festgelegten Dampfmenge bei der thermischen Behandlung der Würze nicht erreicht werden.

Alternativ zu einer vorbestimmten Kennfeld-Matrix kann die Funktion Fmod zum Modifizieren der Siedetemperatur TB auch als eine Funktion ausgebildet sein, welche die Modifizierungsgröße Xi unter Berücksichtigung eines oder mehrerer zeitlich variabler Parameter in Echtzeit berechnet. Damit würde die Funktion Fmod keine zeitlich konstante Kennfeld-Matrix beschreiben, sondern wäre zusätzlich eine Funktion der Zeit: Fmod(t) = Xi(t). So kann die Modifizierungsgröße Xi beispielsweise mittels eines neuronalen Netzes oder anderer bekannter "smart technologies" fortlaufend bestimmt werden. Alternativ kann die Funktion Fmod auch als eine selbstlernende Anpassung eines vorgegebenen Kennfelds ausgestaltet sein.

So könnte beispielsweise die DMS-Konzentration der Würze oder ein anderer technologisch relevanter Parameter zu verschiedenen Zeitpunkten erfasst werden, bspw. durch Inline-Messung, und der erfasste Messwert (Funktion der Zeit) zum jeweiligen Zeitpunkt bei der Berechnung bzw. Bestimmung der Soll-Temperatur TBmod berücksichtigt werden.

Beispielsweise könnte der aktuelle Stammwürzegehalt der Würze inline bestimmt werden und dieser Ist-Stammwürzegehalt beispielsweise mit dem Soll-Stammwürzegehalt und der beim momentan herrschenden Luftdruck geltenden Siedetemperatur TB in die Bestimmung der Soll-Temperatur TBmod, also der modifizierten Siedetemperatur der Würze, einfließen.

In einer erweiterten Ausführungsform des erfindungsgemäßen Verfahrens gemäß Anspruch 2 kann in einem weiteren Schritt (d) eine Temperatur TW der Würze W auf die in Schritt (c) ermittelte Soll-Temperatur TBmod eingestellt werden. Hierdurch ist das erfindungsgemäßen Verfahren nicht nur zum Ermitteln der Solltemperatur TBmod der Würze W für die thermische Behandlung, sondern auch zum Einstellen einer Temperatur TW der Würze W für die thermische Behandlung geeignet.

Damit wird erfindungsgemäß erstmals möglich, das gemäß der vorbestimmten Funktion Fmod definierte technologische Ziel bei der thermischen Behandlung der Würze sicher zu erreichen, ohne hierfür jedoch mehr Energie in Form von Wärme einzusetzen als erforderlich. Mit anderen Worten wird das technologische Ziel aufgrund der Berücksichtigung des aktuellen Luft- oder Umgebungsdrucks aus energetischer Sicht quasi maßgeschneidert erreicht. Darüber hinaus kann erfindungsgemäß vorgesehen sein, dass die vorbestimmte Funktion Fmod mittels einer Echtzeitberechnung den Soll- und/oder Ist-Wert des technologischen Parameters im Zeitpunkt der Bestimmung der Soll-Temperatur TBmod (= modifizierte Siedetemperatur) quasi zeitgleich bestimmt. Damit kann bei der Bestimmung der modifizierten Soll-Temperatur TBmod nicht nur der aktuelle Luft- oder Umgebungsdruck, sondern auch die aktuelle Situation betreffend den oder die technologischen Parameter eingehen, was in einer quasi doppelt maßgeschneiderten Ermittlung der Soll-Temperatur TBmod resultiert.

Beim erfindungsgemäßen Verfahren ist die Soll-Temperatur TBmod grundsätzlich die Temperatur, auf die die Würze während der thermischen Behandlung einzustellen bzw. zu erwärmen ist. Dies kann jedoch auch bedeuten, dass die Temperatur der Würze während der thermischen Behandlung, beispielsweise in einem Wärmeüberträger, derart eingestellt wird, dass die Würze am Ausgang des Wärmeüberträgers, also beim Verlassen des Wärmeüberträgers, die wie vorstehend beschrieben ermittelte Soll-Temperatur aufweist. Dies kann dazu führen, dass die tatsächlich einzustellende Temperatur der Würze an der Wärmeübertragungsfläche geringfügig (bis zu 0,5 °C) über der rechnerisch ermittelten Soll-Temperatur TBmod liegt. Im konkreten Fall kann der Fachmann die Wärmeübertragung im Wärmeüberträger durch einfaches Probieren in der bestehenden Anlage so einstellen und steuern, dass die Würze entweder direkt an der Wärmeübertragungsfläche oder am Ausgang des Wärmeträgers auf die mit dem erfindungsgemäßen Verfahren ermittelte Soll-Temperatur TBmod eingestellt wird.

Folglich kann nach einer vorteilhaften Ausführungsform des erfindungsgemäßen Verfahrens das Einstellen der Temperatur TW der Würze W in Schritt (d) auf die in Schritt (c) ermittelte Soll-Temperatur TBmod mittels eines Wärmeüberträgers X erfolgen und zwar derart, dass die Würze W auf die Soll-Temperatur TBmod erwärmt wird oder die Würze W beim Ausströmen aus dem Wärmeüberträger X die in Schritt (c) ermittelte Soll-Temperatur TBmod aufweist. Dabei ist der Wärmeüberträger X vorzugsweise ein Innen- oder Außenkocher.

In den alternativen Ausführungsform des erfindungsgemäßen Verfahrens kann das Einstellen der Temperatur TW der Würze W in Schritt (d) derart erfolgen, dass die in einer Würzepfanne, in einem Speichergefäß oder in einem Ausdampfgefäß vorhandene Würze W die in Schritt (c) ermittelte Soll-Temperatur TBmod aufweist, beispielsweise durch eine Wand- und/oder Bodenheizung.

Abgesehen von der vorstehend diskutierten Energie- und Wassererspamis ist es nach dem erfindungsgemäßen Verfahren nicht mehr erforderlich, die Würze oder das resultierende Bier später zu verschneiden, da beispielsweise sich die gewünschte Gesamtverdampfung mit dem erfindungsgemäßen Verfahren genau einstellen und erzielen lässt. Darüber hinaus wird stets eine gleichmäßige Produktqualität erzielt, da nicht im Überschuss verdampft wird. Aus demselben Grund wird trotz der Erzielung der technologischen Vorgabe erfindungsgemäß die thermische Belastung der Würze so gering möglich gehalten. Dies resultiert in einer im Mittel geringeren TBZ und helleren Farbe der Würze. Schließlich ist der Reinigungsaufwand der Heißhalte- bzw. Kocheinrichtung gegenüber herkömmlichen Verfahren verringert.

In einer weiteren Ausführungsform kann das erfindungsgemäße Verfahren auch die nachfolgenden Schritte umfassen:

(e) Erfassen der Temperatur TW der Würze W; und

(f) Ermitteln der Wärmemenge Q, die zum Erwärmen der Würze W auf die in Schritt (c) ermittelte Soll-Temperatur TBmod erforderlich ist, auf Basis einer Differenz der in Schritt (c) ermittelten Soll-Temperatur TBmod und der in Schritt (e) erfassten Temperatur TW, und unter Berücksichtigung einer Masse MW der zur thermischen Behandlung vorgesehenen Würze W.

Mithilfe dieser zusätzlichen Verfahrensschritte kann mit dem erfindungsgemäßen Verfahren die für die thermische Behandlung der Würze W erforderliche Wärmemenge Q bestimmt werden. Diese Information kann der Fachmann zur Auslegung des Wärmeüberträgers, zur Wahl des geeigneten Wärmeträgers (Heizmittel), zur Bestimmung der erforderlichen Menge an Wärmeträger, und der geeigneten Wärmeträgertemperatur vorteilhaft nutzen.

Konkret kann daher das erfindungsgemäße Verfahren auch den folgenden Schritt aufweisen:

(g) Ermitteln einer zum Erwärmen der Würze erforderlichen Masse an Dampf MD oder Heißwasser MH auf Basis der in Schritt (f) ermittelten Wärmemenge Q.

Die erfindungsgemäße Ermittlung der erforderlichen Masse an Wärmeträger vereinfacht die Steuerung der thermischen Behandlung der Würze.

Weiter kann das erfindungsgemäße Verfahren in einer vorteilhaften Ausführungsform ferner den Schritt aufweisen:

(h) Zuführen der in Schritt (f) ermittelten Wärmemenge Q zur Würze W.

Hierdurch wird die Würze W in die Lage versetzt, eine zur Erzielung des technologischen Ziels ausreichende, aber nicht darüber hinausgehende Temperatur anzunehmen.

In einer weiteren, besonders vorteilhaften Ausführungsform kann vorgesehen sein, dass ein Teil oder alle Schritte des erfindungsgemäßen Verfahrens, beispielsweise die Schritte (a) bis (c), (a) bis (d), (a) bis (e), (a) bis (f), (a) bis (g), oder (a) bis (h) nicht nur ein einziges Mal durchgeführt werden, sondern einmal oder sogar mehrmals wiederholt werden. Werden die genannten Schrittfolgen des erfindungsgemäßen Verfahrens oder eine davon ein einziges Mal durchgeführt, vorzugsweise zu Beginn der thermischen Behandlung der Würze (oder auch während der thermischen Behandlung), so hat dies den Vorteil, dass einerseits die aktuelle thermodynamischen Situation erfasst wird, andererseits der Rechenaufwand verhältnismäßig gering ist.

Besonders vorteilhaft ist jedoch, wenn eine der vorstehend genannten Schrittfolgen des erfindungsgemäßen Verfahrens ein oder sogar mehrmals wiederholt werden, wodurch die thermische Behandlung präzise an die sich möglicherweise fortlaufend ändernden Umgebungsbedingungen angepasst werden kann, um das technologische Ziel mit einem minimalen Energieaufwand zu erreichen. Aus technologischer Sicht ist es daher am besten, eine der vorstehend genannten Schrittfolgen fortlaufend oder im zeitlich verhältnismäßig kurzen Abständen zu wiederholen, um auf Änderungen und Schwankungen der Umgebungsbedingungen und gegebenenfalls auch des technologischen Zustandes der Würze zeitnah zu reagieren.

In einer besonders vorteilhaften Ausführungsform wird eine der vorstehend genannten Schrittfolgen des erfindungsgemäßen Verfahrens einmal zu Beginn der thermischen Behandlung der Würze durchgeführt und dann eine der vorstehend genannten Schrittfolgen ein oder mehrmals während der thermischen Behandlung wiederholt. Hierdurch kann von vornherein, also zu Beginn der thermischen Behandlung, die geeignete Soll-Temperatur TBmod eingestellt und im weiteren Verlauf durch die Wiederholung(en) einmal oder sogar fortlaufend an die dann vorliegende Situation angepasst werden.

So kann das Wiederholen der vorstehend genannten Schrittfolgen vorzugsweise in einer Frequenz von wenigstens 2/h, vorzugsweise wenigstens 1/min, vorzugsweise 1/min bis 600/min, vorzugsweise 10/min bis 60/min, erfolgen. Dabei ist eine Wiederholhäufigkeit im Bereich von 1/min bis 60/min ideal, da einerseits der Mess- und Rechenaufwand begrenzt ist, andererseits die Geschwindigkeit, mit der erfindungsgemäß auf Änderungen der Umgebungsbedingungen reagiert werden kann, ausreichend hoch ist, um eine Energievergeudung effizient zu vermeiden.

Nach einer besonderen Ausführungsform des erfindungsgemäßen Verfahrens kann die vorbestimmte Funktion Fmod ein vorbestimmtes Kennfeld oder eine Echtzeitberechnung sein, wobei jeweils ein oder mehrere Parameter PW der Würze W und/oder der thermischen Behandlung der Würze W berücksichtigt werden können, ausgewählt aus einer Gruppe, bestehend aus: einer Soll-Gesamtverdampfung (insgesamt zu verdampfende Wassermasse in Prozent der Würzemasse des betreffenden Suds), einer Restverdampfung (noch zu verdampfende Wassermasse in Prozent der Würzemasse des betreffenden Suds), einer Konzentration von DMS in der Würze W, einer Konzentration von koagulierbarem Stickstoff (Nkoag) in der Würze W, einer Konzentration von einem oder mehreren Hopfenölen in der Würze W, einer Konzentration der $\alpha$-Säuren, der $\beta$-Säuren und/oder der Iso-$\alpha$-Säuren in der Würze W, den Bittereinheiten der Würze W nach EBC, einer Farbe der Würze W, einer TBZ der Würze W, einer kinematischen Viskosität der Würze W, einer Kochdauer der Würze W, einem pH-Wert der Würze W, einer Konzentration von gesamtlöslichem Stickstoff in der Würze W, einem Stammwürzegehalt der Würze W, einer Leitfähigkeit der Würze W, einer Konzentration von freiem Amino-Stickstoff in der Würze W, einer Konzentration von Feststoffen in der Würze W, einer Trübung der Würze W, einer Konzentration von Polyphenolen in der Würze W, einer Konzentration von DMS-P in der Würze W, einer Konzentration von Eiweiß in der Würze W, einer Konzentration von Anthocyanogenen in der Würze W, und einem Iodwert in der Würze W.

In vorrichtungstechnischer Hinsicht wird die vorstehend Aufgabe durch die erfindungsgemäße Vorrichtung nach Anspruch 11 gelöst. Die Vorteile und Abwandlungen des erfindungsgemäßen Verfahrens gelten, soweit sie die Vorrichtung betreffen, für die erfindungsgemäße Vorrichtung analog.

So wird eine Vorrichtung V zum Ermitteln einer Soll-Temperatur TBmod einer Würze W für eine thermische Behandlung der Würze W in einer Brauerei beansprucht, wobei die Vorrichtung V aufweist:

eine Druckerfassungseinrichtung PS zum Erfassen eines Drucks p der Umgebungsluft der Brauerei oder der Luft im Sudhaus der Brauerei oder einer der Würze W überlagerten Gasphase GP, wobei die Druckerfassungseinrichtung PS geeignet ist, den Druck p zu Beginn und/oder während der thermischen Behandlung der Würze W zu erfassen;

eine Ermittlungseinrichtung ETB zum Ermitteln oder Berechnen einer Siedetemperatur TB von Wasser A oder der Würze W oder eines Modellstoffgemischs M in Abhängigkeit von dem in Schritt (a) erfassten Druck p; und

eine Modifizierungseinrichtung MTB zum Modifizieren der von der Ermittlungseinrichtung ETB ermittelten oder berechneten Siedetemperatur TB auf Basis einer vorbestimmten Funktion Fmod, vorzugsweise eines Kennfelds oder einer Echtzeitberechnung, unter Berücksichtigung wenigstens eines Parameters PW der Würze W und/oder der thermischen Behandlung der Würze W, vorzugsweise der Gesamtverdampfung, wodurch eine Soll-Temperatur TBmod der Würze W erhalten wird.

Dabei kann die Druckerfassungseinrichtung PS beispielsweise ein übliches Druckmessgerät mit einem dem Fachmann bekannten Drucksensor sein. Die Druckerfassungseinrichtung PS ist jedoch nicht auf ein Messgerät beschränkt, sondern kann beispielsweise eine Einrichtung sein, die Zugang hat zu Daten wie dem Luftdruck der Umgebung der Brauerei oder der Luftdruck im Sudhaus der Brauerei oder dem Druck einer der Würze W überlagerten Gasphase GP, einschließlich aktueller und/oder historischer Werte, beispielsweise aus einem Datenerfassungssystem der Brauerei oder aus dem Internet, und diese erfassen kann. Die Druckerfassungseinrichtung PS ist zur Durchführung des Schritts (a) des erfindungsgemäßen Verfahrens geeignet.

Die Ermittlungseinrichtung ETB zum Ermitteln oder Berechnen einer Siedetemperatur TB und die Modifizierungseinrichtung MTB zum Modifizieren der von der Ermittlungseinrichtung ETB ermittelten oder berechneten Siedetemperatur TB können rechner- bzw. mikroprozessorbasierte Einrichtungen sein. In einer vorteilhaften Ausführungsform können die Ermittlungseinrichtung ETB und die Modifizierungseinrichtung MTB auch von einer und derselben rechner- bzw. mikroprozessorbasierten Einheit verkörpert werden. Die Ermittlungseinrichtung ETB ist zur Durchführung des Schritts (b) des erfindungsgemäßen Verfahrens geeignet.

Die Modifizierungseinrichtung MTB berechnet anhand der vorbestimmten Funktion Fmod, vorzugsweise eines Kennfelds oder einer Echtzeitberechnung, und unter Berücksichtigung der von der Ermittlungseinrichtung ETB bestimmten Siedetemperatur TB und wenigstens eines Parameters PW der Würze W und/oder der thermischen Behandlung der Würze W die Soll-Temperatur TBmod, welche eine modifizierte Siedetemperatur TB ist. Die Modifizierungseinrichtung MTB ist zur Durchführung des Schritts (c) des erfindungsgemäßen Verfahrens geeignet.

Vorteilhafte Ausführungsformen der erfindungsgemäßen Vorrichtung sind Gegenstand der abhängigen Ansprüche.

So kann die erfindungsgemäße Vorrichtung V ferner eine Steuer- oder Regeleinrichtung ESR zum Einstellen einer Temperatur TW der Würze W auf die von der Modifizierungseinrichtung MTB ermittelte Soll-Temperatur TBmod der Würze W aufweisen. Hierdurch wird die Vorrichtung V auch zum Einstellen einer Temperatur TW der Würze W für die thermische Behandlung geeignet. Die Steuer- oder Regeleinrichtung ESR ist zur Durchführung des Schritts (d) des erfindungsgemäßen Verfahrens geeignet.

In einer weiteren, vorteilhaften Ausführungsform kann die Vorrichtung V ferner aufweisen: eine Temperaturerfassungseinrichtung ETW zum Erfassen einer Temperatur TW der Würze W und eine Ermittlungseinrichtung EQ zum Ermitteln oder Berechnen der Wärmemenge Q, die zum Erwärmen der Würze W auf die von der Modifizierungseinrichtung MTB ermittelte Soll-Temperatur TBmod, auf Basis einer Differenz der von der Modifizierungseinrichtung MTB ermittelten Soll-Temperatur TBmod und von der Temperaturerfassungseinrichtung ETW erfassten Temperatur TW der Würze W, und einer Masse MW, eines Volumens VW oder der Stoffmenge SW der zur thermischen Behandlung vorgesehenen Würze W. Die Temperaturerfassungseinrichtung ETW ist zur Durchführung des Schritts (e) des erfindungsgemäßen Verfahrens geeignet.

Dabei kann die Ermittlungseinrichtung EQ zum Ermitteln oder Berechnen der Wärmemenge Q vorzugsweise ferner geeignet sein, eine zum Erwärmen der Würze W erforderliche Menge an einem Wärmeträger WT, vorzugsweise ein Dampf MD oder Heißwasser MH, auf Basis der ermittelten Wärmemenge Q zu ermitteln oder zu berechnen. Die Ermittlungseinrichtung EQ ist zur Durchführung des Schritts (f) und vorzugsweise auch des Schritts (g) des erfindungsgemäßen Verfahrens geeignet.

Des Weiteren kann die erfindungsgemäße Vorrichtung V ferner aufweisen:

einen Wärmeüberträger X zum Erwärmen der Würze W auf die von der Modifizierungseinrichtung MTB ermittelte Soll-Temperatur TBmod;

wobei der Wärmeüberträger X vorzugsweise ein Innen- oder Außenkocher ist; oder wobei der Wärmeüberträger X geeignet ist, die in einer Würzepfanne, in einem Speichergefäß oder in einem Ausdampfgefäß vorhandene Würze W auf die von der Modifizierungseinrichtung MTB ermittelte Soll-Temperatur TBmod zu erwärmen; oder

wobei der Wärmeüberträger X geeignet ist, die von der Ermittlungseinrichtung EQ zum Ermitteln oder Berechnen der Wärmemenge Q ermittelte Wärmemenge Q auf die Würze W zu übertragen oder in die Würze W einzubringen.

Besonders vorteilhaft ist dabei, wenn der Wärmeüberträger X zum Erwärmen der Würze W mittels Dampf D oder Heißwasser H geeignet ist. Der Wärmeüberträger X ist zur Durchführung des Schritts (h) des erfindungsgemäßen Verfahrens geeignet.

Weiter kann die erfindungsgemäße Vorrichtung zur Durchführung des erfindungsgemäßen Verfahrens, wie vorstehend beschrieben, geeignet sein.

Schließlich wird die vorstehend definierte Aufgabe durch die erfindungsgemäße Verwendung nach Anspruch 18 gelöst.

So wird die Verwendung eines Drucks p der Umgebungsluft einer Brauerei oder der Luft im Sudhaus der Brauerei oder einer einer Würze W überlagerten Gasphase GW, und einer vorbestimmten Funktion Fmod, vorzugsweise eines Kennfelds oder einer Echtzeitberechnung, zur Ermittlung einer Soll-Temperatur TBmod der Würze W für eine thermische Behandlung der Würze W in einer Brauerei beansprucht. Dabei erfolgt das Erfassen des Drucks p zu Beginn und/oder während einer thermischen Behandlung der Würze W. Ferner wird der Druck p zur Ermittlung einer Siedetemperatur TB von Wasser A oder der Würze W oder eines Modellstoffgemischs M verwendet. Dabei wird die vorbestimmte Funktion Fmod unter Berücksichtigung wenigstens eines Parameters PW der Würze W und/oder der thermischen Behandlung der Würze W zur Modifizierung der Siedetemperatur TB verwendet, wodurch die Soll-Temperatur TBmod der Würze W erhalten wird. Dabei wird der wenigstens eine Parameter PW der Würze W und/oder der thermischen Behandlung der Würze W ausgewählt aus einer Gruppe, bestehend aus: einer Soll-Gesamtverdampfung, einer Restverdampfung, einer Konzentration von DMS in der Würze W, einer Konzentration von koagulierbarem Stickstoff Nkoag in der Würze W, einer Konzentration von einem oder mehreren Hopfenölen in der Würze W, einer Konzentration der α-Säuren, der β-Säuren und/oder der Iso-α-Säuren in der Würze W, den Bittereinheiten der Würze W nach EBC, einer Farbe der Würze W, einer TBZ der Würze W, einer kinematischen Viskosität der Würze W, einer Kochdauer der Würze W, einem pH-Wert der Würze W, einer Konzentration von gesamtlöslichem Stickstoff in der Würze W, einem Stammwürzegehalt der Würze W, einer Leitfähigkeit der Würze W, einer Konzentration von freiem Amino-Stickstoff in der Würze W, einer Konzentration von Feststoffen in der Würze W, einer Trübung der Würze W, einer Konzentration von Polyphenolen in der Würze W, einer Konzentration von DMS-P in der Würze W, einer Konzentration von Eiweiß in der Würze W, einer Konzentration von Anthocyanogenen in der Würze W, und einem Iodwert in der Würze W.

Es gelten die vorstehend in Zusammenhang mit dem erfindungsgemäßen Verfahren beschriebenen Vorteile und Weiterbildungen für die erfindungsgemäße Verwendung analog. Dies bedeutet, dass die zur weiteren Spezifizierung des erfindungsgemäßen Verfahrens offenbarten Merkmale auch zur weiteren Spezifizierung der erfindungsgemäßen Verwendung geeignet sind und im Rahmen der vorliegenden Erfindung auch in Zusammenhang mit der erfindungsgemäßen Verwendung als offenbart gelten.

Beispielrechnung für den Reinstoff Wasser:

1) Im erfindungsgemäßen Beispiel wird ein Umgebungsluftdruck p = pamb (z.B. 1.005 mbar) erfasst. Über ein vorbestimmtes Kennfeld, welches im Beispiel als eine Matrix an Werten definiert ist, wird anhand des erfassten Umgebungsluftdrucks p = 1.005 mbar die Siedetemperatur TS = Ts amb (z.B. 99,74 °C) bestimmt (vgl. untenstehende Tabelle). Weiter wird anhand der technologischen Zielgröße PW, beispielsweise eine Gesamtverdampfung von 6 %, welche die vorbestimmte Funktion Fmod bestimmt, die Soll-Temperatur TBmod = $T_{AK}$ der Würze (W) (= 99,74 °C + $X_{6,5}$ = 103 °C) bestimmt, welche ausgelesen wird. Hierbei können die Werte des Kennfeldes gegebenenfalls auch Stützstellen für Interpolationen bilden.

| Luftdruck | Siedetemperatur | 4% Verdampfung | 6% Verdampfung |
|---|---|---|---|
| $p_{amb}$ [mbar] | $T_{s\_amb}$ [°C] | $T_{AK}$ [°C] | $T_{AK}$ [°C] |
| 980 | 99,0 | $T_{AK}$= 99,0 + $X_{4,1}$ | $T_{AK}$ = 99,0 + $X_{6,1}$ |
| . . . | . . . | . . . | . . . |
| 1005 | 99,74 | $T_{AK}$= 99,74 + $X_{4,5}$ | $T_{AK}$ = 99,74 + $X_{6,5}$ |
| . . . | . . . | . . . | . . . |
| 1030 | 100,45 | $T_{AK}$= 100,45 + $X_{4,10}$ | $T_{AK}$ = 100,45 + $X_{6,10}$ |

2) Im Vergleichsbeispiel, das ein konventionelles Verfahren nachbildet, ist zur Erzielung einer Gesamtverdampfung von mindestens 6 % bei allen auftretenden Luftdrücken (980 bis 1.030 mbar) eine Soll-Temperatur von 103,8 °C fest eingestellt.

Beim aktuellen Umgebungsluftdruck p = 1.005 mbar und bei der Soll-Temperatur von 103,8 °C wird konventionell eine Gesamtverdampfung vom 7,64 % erhalten.

3) Aus dem Vergleich zwischen der Gesamtverdampfung beim erfindungsgemäßen Verfahren (ca. 6 %) und des konventionellen Verfahrens (ca. 9 %) ergibt sich eine Energieeinsparung von (9 - 6) % / 6 % = 50 % durch die Anwendung des erfindungsgemäßen Verfahrens.

Das Vergleichen von Verdampfungswerten ist nur unter Angabe der Drücke aussagekräftig. Für das Aufzeigen des maximal möglichen Einsparpotentials der Erfindung muss das konventionelle Verfahren für ca. 6 % Gesamtverdampfung bei 1030 mbar eingestellt werden und die sich ergebende Gesamtverdampfung bei 980 mbar mit der Gesamtverdampfung des erfindungsgemäßen Verfahren für ca. 6 % Gesamtverdampfung bei 980 mbar verglichen werden.

Theoretischer Hintergrund am Beispiel eines Modellstoffgemisches M

1) Die Stoffdaten des Modellstoffgemisches werden über die Massenanteile wie folgt bestimmt, wie nachfolgend am Beispiel der Wärmekapazität und der Enthalpie gezeigt. Hierfür wird die Annahme der idealen Stoffe und einer idealen Mischung getroffen und zwischenmolekulare Wechselwirkungen vernachlässigt.

$$cp_{m\_ges} = \sum_{i=0}^{n} w_i * cp_i$$

$$h_{m\_ges} = \sum_{i=0}^{n} w_i * h_i$$

Für Wasser als Modellstoff M ergibt sich für p = 1.030 mbar und einer Siedetemperatur TB von 100,45 °C:

$$h_m = h_{H2O} = 420,8 \text{ kJ/kg.}$$

2) Die Bestimmung der dem Modellstoffgemisch M zugeführten bzw. zuzuführenden Energie erfolgt zur Vereinfachung unter Vernachlässigung der kinetischen und potentiellen Energie des Modellstoffgemischs (massenspezifisch für 1 kg Modellstoffgemisch M:

$$U = E - \underset{=0}{E^{kin}} - \underset{=0}{E^{pot}} \qquad \rightarrow \qquad \Delta U = U_{Tsamb} - U_{TAK}$$

$$\Delta u_{mix} = u_{Tsamb} - u_{TAK} \qquad \left[ \frac{kJ}{kg_{mix}} \right]$$

Für Wasser als Modellstoff M ergibt sich bei für p = 1.030 mbar und einer Soll-Temperatur (Temperatur nach Erwärmen des Wasser, d.h., am Kocherausgang) von 102,6 °C (aus Stoffdatentabelle): $\Delta_{Umix} = U_{Tsamb} - U_{TAK} =$ (420,8 - 430,072) kJ/kg = - 9,27 kJ/kg, wobei $U_{Tsamb}$ die inneren Energie des Wassers bei der Siedetemperatur TB beim erfassten Druck p ist und $U_{TAK}$ die inneren Energie des Wassers bei der Soll-Temperatur TBmod (= erfindungsgemäß modifizierte Siedetemperatur TB) ist.

Die innere Energie $U_{TAK}$ ist bei der Soll-Temperatur TBmod aufgrund der erfindungsgemäßen Modifizierung größer als die innere Energie im thermodynamischen Gleichgewicht $U_{Tsamb}$. Damit das Modellstoffgemisch M wieder den Zustand des thermodynamischen Gleichgewichts erreicht, muss der Überschuss $\Delta U$ an innerer Energie dissipiert werden. Zur Dissipation dieser überschüssigen Energie reagiert das System mit einem Phasenwechsel und somit mit der Verdampfung einer bestimmten Menge des Modellgemisches, bis sich das Phasengleichgewicht wieder eingestellt hat.

3) Die Verdampfung an Modellstoffgemisch M wird wie folgt über den φ-γ-Ansatz bestimmt (massenspezifisch für 1 kg Modellstoffgemisch), wobei vorliegend die Verweilzeit, Oberflächen und anlagenspezifische Effekte, wie bspw. Kamineffekt, zur Vereinfachung hier vernachlässigt werden:

Literatur/Stoffdatentabellen

$$\Delta u_{mix} = m_{mix}^{lv} * \Delta h_{mix}^{lv} \longleftarrow \qquad \Delta h_{mix}^{lv} = \sum_{i=0}^{n} x_i^v * \Delta h_i^{lv}$$

$$m_{mix}^{lv} = \frac{\Delta u_{mix}}{\Delta h_{mix}^{lv}} \qquad \left[\frac{kg}{kg_{mix}}\right]$$

**$\varphi$- $\gamma$-Ansatz für einen Stoff i**

$$x_i^L * p_i^{sat} * \varphi_i^L * \gamma_i * \pi_i^{L,rein} = x_i^v * p_{ges} * \varphi_i^v$$

Dabei wird mit $m_{mix}^{lv}$ die Masse des Modellstoffgemisches M erhalten, die einen Phasenwechsel vollzieht, also verdampft. Im Fall von reinem Wasser gilt: $m_{mix}^{lv} = 9{,}27$ kg/ 2256 kg = 0,00411 = 0,411 % Verdampfung der Gesamtmasse pro Umlauf. Dies ergibt bei 10 Umläufen während der thermischen Behandlung eine Gesamtverdampfung von 4,11 % pro Sud.

Durch die Erfassung des Luftdruckes und somit des Druckes der Gasphase und Kenntnis der Stoffdaten kann also über den Parameter "Temperatur" die Verdampfung beeinflusst werden. Durch Erhöhen oder Reduzieren der Temperatur kann der Phasenübergang einzelner Komponenten beeinflusst werden. Hieraus ist ersichtlich, dass durch eine Änderung der Temperatur der Phasenwechsel des Wassers beeinflusst wird.

**Patentansprüche**

1. Verfahren zum Ermitteln einer Soll-Temperatur (TBmod) einer Würze (W) für eine thermische Behandlung der Würze (W) in einer Brauerei, wenigstens mit den Schritten:

   (a) Erfassen eines Drucks (p) der Umgebungsluft der Brauerei oder der Luft im Sudhaus der Brauerei oder einer der Würze (W) überlagerten Gasphase (GW), wobei das Erfassen des Drucks (p) zu Beginn und/oder während der thermischen Behandlung der Würze (W) erfolgt;
   (b) Ermitteln einer Siedetemperatur (TB) von Wasser (A) oder der Würze (W) oder eines Modellstoffgemischs (M) in Abhängigkeit von dem in Schritt (a) erfassten Druck (p); und
   (c) Modifizieren der in Schritt (b) erhaltenen Siedetemperatur (TB) auf Basis einer vorbestimmten Funktion (Fmod), vorzugsweise eines Kennfelds oder einer Echtzeitberechnung, unter Berücksichtigung wenigstens eines Parameters (PW) der Würze (W) und/oder der thermischen Behandlung der Würze (W), vorzugsweise der Gesamtverdampfung, wodurch eine Soll-Temperatur (TBmod) der Würze (W) erhalten wird.

2. Verfahren nach Anspruch 1, wobei das Verfahren ferner zum Einstellen einer Temperatur (TW) der Würze (W) für die thermische Behandlung ist, ferner mit dem Schritt:
   (d) Einstellen einer Temperatur (TW) der Würze (W) auf die in Schritt (c) ermittelte Soll-Temperatur (TBmod).

3. Verfahren nach Anspruch 1 oder 2, wobei das Verfahren ferner zum Ermitteln einer für die thermische Behandlung der Würze (W) erforderlichen Wärmemenge (Q) ist, ferner mit den Schritten:

   (e) Erfassen der Temperatur (TW) der Würze (W); und
   (f) Ermitteln der Wärmemenge (Q), die zum Erwärmen der Würze (W) auf die in Schritt (c) ermittelte Soll-Temperatur (TBmod) erforderlich ist, auf Basis einer Differenz der in Schritt (c) ermittelten Soll-Temperatur (TBmod) und der in Schritt (e) erfassten Temperatur (TW), und unter Berücksichtigung einer Masse (MW) der zur thermischen Behandlung vorgesehenen Würze (W).

4. Verfahren nach Anspruch 3, ferner mit dem Schritt:
   (g) Ermitteln einer zum Erwärmen der Würze erforderlichen Masse an Dampf (MD) oder Heißwasser (MH) auf Basis der in Schritt (f) ermittelten Wärmemenge (Q).

5. Verfahren nach Anspruch 3 oder 4, wobei das Verfahren ferner den Schritt aufweist:
(h) Zuführen der in Schritt (f) ermittelten Wärmemenge (Q) zur Würze (W).

6. Verfahren nach einem der Ansprüche 2 bis 5, wobei das Einstellen der Temperatur (TW) der Würze (W) in Schritt (d) auf die in Schritt (c) ermittelte Soll-Temperatur (TBmod) mittels eines Wärmeüberträgers (X) und derart erfolgt, dass die Würze (W) auf die Soll-Temperatur (TBmod) erwärmt wird oder die Würze (W) beim Ausströmen aus dem Wärmeüberträger (X) die in Schritt (c) ermittelte Soll-Temperatur (TBmod) aufweist; wobei der Wärmeüberträger (X) vorzugsweise ein Innen- oder Außenkocher ist.

7. Verfahren nach einem der Ansprüche 2 bis 6, wobei das Einstellen der Temperatur (TW) der Würze (W) in Schritt (d) auf die in Schritt (c) ermittelte Soll-Temperatur (TBmod) derart erfolgt, dass die in einer Würzepfanne, in einem Speichergefäß oder in einem Ausdampfgefäß vorhandene Würze (W) die in Schritt (c) ermittelte Soll-Temperatur (TBmod) aufweist.

8. Verfahren nach einem der Ansprüche 1 bis 7, ferner mit dem Schritt:
(j) ein- oder mehrmaliges Wiederholen der Schritte (a) bis (c), (a) bis (d), (a) bis (e), (a) bis (f), (a) bis (g) oder (a) bis (h), wobei das Wiederholen fortlaufend/kontinuierlich oder zeitlich beabstandet erfolgt.

9. Verfahren nach Anspruch 8, wobei das Wiederholen in Schritt (j) in einer Frequenz von wenigstens 2/h, vorzugsweise wenigstens 1/min, vorzugsweise 1/min bis 600/min, vorzugsweise 10/min bis 60/min, erfolgt.

10. Verfahren nach einem der Ansprüche 1 bis 9 wobei die vorbestimmte Funktion (Fmod) ein vorbestimmtes Kennfeld ist und einen oder mehrere Parameter (PW) der Würze (W) und/oder der thermischen Behandlung der Würze (W) berücksichtigt, ausgewählt aus einer Gruppe, bestehend aus: einer Soll-Gesamtverdampfung, einer Restverdampfung, einer Konzentration von DMS in der Würze (W), einer Konzentration von koagulierbarem Stickstoff (Nkoag) in der Würze (W), einer Konzentration von einem oder mehreren Hopfenölen in der Würze (W), einer Konzentration der α-Säuren, der β-Säuren und/oder der Iso-α-Säuren in der Würze (W), den Bittereinheiten der Würze (W) nach EBC, einer Farbe der Würze (W), einer TBZ der Würze (W), einer kinematischen Viskosität der Würze (W), einer Kochdauer der Würze (W), einem pH-Wert der Würze (W), einer Konzentration von gesamtlöslichem Stickstoff in der Würze (W), einem Stammwürzegehalt der Würze (W), einer Leitfähigkeit der Würze (W), einer Konzentration von freiem Amino-Stickstoff in der Würze (W), einer Konzentration von Feststoffen in der Würze (W), einer Trübung der Würze (W), einer Konzentration von Polyphenolen in der Würze (W), einer Konzentration von DMS-P in der Würze (W), einer Konzentration von Eiweiß in der Würze (W), einer Konzentration von Anthocyanogenen in der Würze (W), und einem Iodwert in der Würze (W); oder

wobei die vorbestimmte Funktion (Fmod) eine Echtzeitberechnung ist und einen oder mehrere Parameter (PW) der Würze (W) und/oder der thermischen Behandlung der Würze (W) berücksichtigt, ausgewählt aus einer Gruppe, bestehend aus: einer Soll-Gesamtverdampfung, einer Restverdampfung, einer Konzentration von DMS in der Würze (W), einer Konzentration von koagulierbarem Stickstoff (Nkoag) in der Würze (W), einer Konzentration von einem oder mehreren Hopfenölen in der Würze (W), einer Konzentration der α-Säuren, der β-Säuren und/oder der Iso-α-Säuren in der Würze (W), den Bittereinheiten der Würze (W) nach EBC, der Farbe der Würze (W), der TBZ der Würze (W), der kinematischen Viskosität der Würze (W); einer Kochdauer der Würze (W), einem pH-Wert der Würze (W), einer Konzentration von gesamtlöslichem Stickstoff in der Würze (W), einem Stammwürzegehalt der Würze (W), einer Leitfähigkeit der Würze (W), einer Konzentration von freiem Amino-Stickstoff in der Würze (W), einer Konzentration von Feststoffen in der Würze (W), einer Trübung der Würze (W), einer Konzentration von Polyphenolen in der Würze (W), einer Konzentration von DMS-P in der Würze (W), einer Konzentration von Eiweiß in der Würze (W), einer Konzentration von Anthocyanogenen in der Würze (W), und einem Iodwert in der Würze (W).

11. Vorrichtung (V) zum Ermitteln einer Soll-Temperatur (TBmod) einer Würze (W) für eine thermische Behandlung der Würze (W) in einer Brauerei, wobei die Vorrichtung (V) aufweist:

eine Druckerfassungseinrichtung (PS) zum Erfassen eines Drucks (p) der Umgebungsluft der Brauerei oder der Luft im Sudhaus der Brauerei oder einer der Würze (W) überlagerten Gasphase (GP), wobei die Druckerfassungseinrichtung (PS) geeignet ist, den Druck (p) zu Beginn und/oder während der thermischen Behandlung der Würze (W) zu erfassen;
eine Ermittlungseinrichtung (ETB) zum Ermitteln oder Berechnen einer Siedetemperatur (TB) von Wasser (A) oder der Würze (W) oder eines Modcllstoffgemischs (M) in Abhängigkeit von dem in Schritt (a) erfassten Druck (p); und
eine Modifizierungseinrichtung (MTB) zum Modifizieren der von der Ermittlungseinrichtung (ETB) ermittelten oder berechneten Siedetemperatur (TB) auf Basis einer vorbestimmten Funktion (Fmod), vorzugsweise eines Kennfelds oder einer Echtzeitberechnung, unter Berücksichtigung wenigstens eines Parameters (PW) der Würze (W) und/oder der thermischen Behandlung der Würze (W), vorzugsweise der Gesamtverdampfung, wodurch eine Soll-Temperatur (TBmod) der Würze (W) erhalten wird.

**12.** Vorrichtung (V) nach Anspruch 11, wobei die Vorrichtung (V) ferner zum Einstellen einer Temperatur (TW) der Würze (W) für die thermische Behandlung ist, wobei die Vorrichtung (V) ferner aufweist:
eine Steuer- oder Regeleinrichtung (ESR) zum Einstellen einer Temperatur (TW) der Würze (W) auf die von der Modifizierungseinrichtung (MTB) ermittelte Soll-Temperatur (TBmod) der Würze (W).

**13.** Vorrichtung nach Anspruch 11 oder 12, wobei die Vorrichtung (V) ferner zum Ermitteln einer für die thermische Behandlung der Würze (W) erforderlichen Wärmemenge (Q) ist, wobei die Vorrichtung (V) ferner aufweist:

eine Temperaturerfassungseinrichtung (ETW) zum Erfassen einer Temperatur (TW) der Würze (W); und
eine Ermittlungseinrichtung (EQ) zum Ermitteln oder Berechnen der Wärmemenge (Q), die zum Erwärmen der Würze (W) auf die von der Modifizierungseinrichtung (MTB) ermittelte Soll-Temperatur (TBmod), auf Basis einer Differenz der von der Modifizierungseinrichtung (MTB) ermittelten Soll-Temperatur (TBmod) und von der Temperaturerfassungseinrichtung (ETW) erfassten Temperatur (TW) der Würze (W), und einer Masse (MW), eines Volumens (VW) oder der Stoffmenge (SW) der zur thermischen Behandlung vorgesehenen Würze (W); wobei die Ermittlungseinrichtung (EQ) zum Ermitteln oder Berechnen der Wärmemenge (Q) vorzugsweise ferner geeignet ist, eine zum Erwärmen der Würze (W) erforderliche Menge an einem Wärmeträger (WT), vorzugsweise ein Dampf (MD) oder Heißwasser (MH), auf Basis der ermittelten Wärmemenge (Q) zu ermitteln oder zu berechnen.

**14.** Vorrichtung (V) nach einem der Ansprüche 11 bis 13, wobei die vorbestimmte Funktion (Fmod) ein vorbestimmtes Kennfeld ist und einen oder mehrere Parameter (PW) der Würze (W) und/oder der thermischen Behandlung der Würze (W) berücksichtigt, ausgewählt aus einer Gruppe, bestehend aus: einer Soll-Gesamtverdampfung, einer Restverdampfung, einer Konzentration von DMS in der Würze (W), einer Konzentration von koagulierbarem Stickstoff (Nkoag) in der Würze (W), einer Konzentration von einem oder mehreren Hopfenölen in der Würze (W), einer Konzentration der α-Säuren, der β-Säuren und/oder der Iso-α-Säuren in der Würze (W), den Bittereinheiten der Würze (W) nach EBC, einer Farbe der Würze (W), einer TBZ der Würze (W), einer kinematischen Viskosität der Würze (W), einer Kochdauer der Würze (W), einem pH-Wert der Würze (W), einer Konzentration von gesamtlöslichem Stickstoff in der Würze (W), einem Stammwürzegehalt der Würze (W), einer Leitfähigkeit der Würze (W), einer Konzentration von freiem Amino-Stickstoff in der Würze (W), einer Konzentration von Feststoffen in der Würze (W), einer Trübung der Würze (W), einer Konzentration von Polyphenolen in der Würze (W), einer Konzentration von DMS-P in der Würze (W), einer Konzentration von Eiweiß in der Würze (W), einer Konzentration von Anthocyanogenen in der Würze (W), und einem Iodwert in der Würze (W); und/oder
wobei die vorbestimmte Funktion (Fmod) eine Echtzeitberechnung ist und einen oder mehrere Parameter (PW) der Würze (W) und/oder der thermischen Behandlung der Würze (W) berücksichtigt, ausgewählt aus einer Gruppe, bestehend aus: einer Soll-Gesamtverdampfung, einer Restverdampfung, einer Konzentration von DMS in der Würze (W), einer Konzentration von koagulierbarem Stickstoff (Nkoag) in der Würze (W), einer Konzentration von einem oder mehreren Hopfenölen in der Würze (W), einer Konzentration der α-Säuren, der β-Säuren und/oder der Iso-α-Säuren in der Würze (W), den Bittereinheiten der Würze (W) nach EBC, einer Farbe der Würze (W), einer TBZ der Würze (W), einer kinematischen Viskosität der Würze (W), einer Kochdauer der Würze (W), einem pH-Wert der Würze (W), einer Konzentration von gesamtlöslichem Stickstoff in der Würze (W), einem Stammwürzegehalt der Würze (W), einer Leitfähigkeit der Würze (W), einer Konzentration von freiem Amino-Stickstoff in der Würze (W), einer Konzentration von Feststoffen in der Würze (W), einer Trübung der Würze (W), einer Konzentration von Polyphenolen in der Würze (W), einer Konzentration von DMS-P in der Würze (W), einer Konzentration von Eiweiß in der Würze (W), einer Konzentration von Anthocyanogenen in der Würze (W), und einem Iodwert in der Würze (W).

**15.** Vorrichtung (V) nach einem der Ansprüche 11 bis 14, wobei die Vorrichtung (V) ferner aufweist:

einen Wärmeüberträger (X) zum Erwärmen der Würze (W) auf die von der Modifizierungseinrichtung (MTB) ermittelte Soll-Temperatur (TBmod);
wobei der Wärmeüberträger (X) vorzugsweise ein Innen- oder Außenkocher ist; oder
wobei der Wärmeüberträger (X) geeignet ist, die in einer Würzepfanne, in einem Speichergefäß oder in einem Ausdampfgefäß vorhandene Würze (W) auf die von der Modifizierungseinrichtung (MTB) ermittelte Soll-Temperatur (TBmod) zu erwärmen; oder

wobei der Wärmeüberträger (X) geeignet ist, die von der Ermittlungseinrichtung (EQ) zum Ermitteln oder Berechnen der Wärmemenge (Q) ermittelte Wärmemenge (Q) auf die Würze (W) zu übertragen oder in die Würze (W) einzubringen.

16. Vorrichtung nach Anspruch 15, wobei der Wärmeüberträger (X) zum Erwärmen der Würze (W) mittels Dampf (D) oder Heißwasser (H) geeignet ist.

17. Vorrichtung (V) nach einem der Ansprüche 11 bis 16, wobei die Vorrichtung (V) zur Durchführung des Verfahrens nach einem der Ansprüche 1 bis 10 geeignet ist.

18. Verwendung eines Drucks (p) der Umgebungsluft einer Brauerei oder der Luft im Sudhaus der Brauerei oder einer einer Würze (W) überlagerten Gasphase (GW), und einer vorbestimmten Funktion (Fmod), vorzugsweise eines Kennfelds oder einer Echtzeitberechnung, zur Ermittlung einer Soll-Temperatur (TBmod) der Würze (W) für eine thermische Behandlung der Würze (W) in einer Brauerei; wobei das Erfassen des Drucks (p) zu Beginn und/oder während einer thermischen Behandlung der Würze (W) erfolgt;

wobei der Druck (p) zur Ermittlung einer Siedetemperatur (TB) von Wasser (A) oder der Würze (W) oder eines Modellstoffgemischs (M) verwendet wird; und wobei die vorbestimmte Funktion (Fmod) unter Berücksichtigung wenigstens eines Parameters (PW) der Würze (W) und/oder der thermischen Behandlung der Würze (W) zur Modifizierung der Siedetemperatur (TB) verwendet wird, wodurch die Soll-Temperatur (TBmod) der Würze (W) erhalten wird;
wobei der wenigstens eine Parameter (PW) der Würze (W) und/oder der thermischen Behandlung der Würze (W) ausgewählt aus einer Gruppe, bestehend aus: einer Soll-Gesamtverdampfung, einer Restverdampfung, einer Konzentration von DMS in der Würze (W), einer Konzentration von koagulierbarem Stickstoff (Nkoag) in der Würze (W), einer Konzentration von einem oder mehreren Hopfenölen in der Würze (W), einer Konzentration der α-Säuren, der β-Säuren und/oder der Iso-α-Säuren in der Würze (W), den Bittereinheiten der Würze (W) nach EBC, einer Farbe der Würze (W), einer TBZ der Würze (W), einer kinematischen Viskosität der Würze (W), einer Kochdauer der Würze (W), einem pH-Wert der Würze (W), einer Konzentration von gesamtlöslichem Stickstoff in der Würze (W), einem Stammwürzegehalt der Würze (W), einer Leitfähigkeit der Würze (W), einer Konzentration von freiem Amino-Stickstoff in der Würze (W), einer Konzentration von Feststoffen in der Würze (W), einer Trübung der Würze (W), einer Konzentration von Polyphenolen in der Würze (W), einer Konzentration von DMS-P in der Würze (W), einer Konzentration von Eiweiß in der Würze (W), einer Konzentration von Anthocyanogenen in der Würze (W), und einem Iodwert in der Würze (W).

Europäisches
Patentamt

European
Patent Office

Office européen
des brevets

**EUROPÄISCHER RECHERCHENBERICHT**

Nummer der Anmeldung

EP 22 16 3522

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 196 42 757 C1 (STEINECKER MASCHF ANTON [DE]) 6. August 1998 (1998-08-06) * Ansprüche 1,2 * | 1-18 | INV. C12C7/22 |
| A | EP 0 875 559 A2 (STEINECKER MASCHF ANTON [DE]) 4. November 1998 (1998-11-04) * das ganze Dokument * | 1-18 | |
| A | Anonymous: "ABB Swirl meter for mass steam flow – Beer brewing operation", , 1. Dezember 2012 (2012-12-01), Seiten 1-3, XP055965552, Gefunden im Internet: URL:https://library.e.abb.com/public/f5ada 103ff15b3d1852579f40044007d/A_F_Beer_Brewi ng_04-20-2012.pdf [gefunden am 2022-09-27] * das ganze Dokument * | 1-18 | |
| A | Wright Douglas: "Brew Kettle Boiling", , 1. November 2018 (2018-11-01), Seiten 1-2, XP055965553, Gefunden im Internet: URL:https://documents.scigiene.com/content /documents/Brew_Kettle_Boiling.pdf [gefunden am 2022-09-27] * das ganze Dokument * | 1-18 | **RECHERCHIERTE SACHGEBIETE (IPC)** C12C |

Der vorliegende Recherchenbericht wurde für alle Patentansprüche erstellt

| Recherchenort | Abschlußdatum der Recherche | Prüfer |
|---|---|---|
| Den Haag | 29. September 2022 | Gzil, Piotr |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 16 3522

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2022

| Im Recherchenbericht angeführtes Patentdokument | Datum der Veröffentlichung | Mitglied(er) der Patentfamilie | Datum der Veröffentlichung |
|---|---|---|---|
| DE 19642757 C1 | 06-08-1998 | DE 19642757 C1 | 06-08-1998 |
| | | EP 0837125 A2 | 22-04-1998 |
| | | ES 2212029 T3 | 16-07-2004 |
| EP 0875559 A2 | 04-11-1998 | BR 9801155 A | 11-01-2000 |
| | | CA 2234216 A1 | 08-10-1998 |
| | | CN 1199092 A | 18-11-1998 |
| | | EP 0875559 A2 | 04-11-1998 |
| | | ES 2224305 T3 | 01-03-2005 |
| | | JP 2909537 B2 | 23-06-1999 |
| | | JP H10323174 A | 08-12-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Würze und Bier. MEBAK, Würze Bier Biermisch-getränke. 15. Februar 2012, vol. II
- Würze Bier Biermischgetränke. 15. Februar 2012, vol. II
- Methode R-300.06.032. *Rohstoffe/Rohstoffe Rohfrucht Gerste Malz Hopfen und Hopfenprodukte,* Marz 2016, 353
- Methode R-300.07.151. *Rohstoffe/Rohstoffe, Rohfrucht, Gerste, Malz, Hopfen und Hopfenprodukte,* Marz 2016, 355
- II. Würze Bier Biermischgetränke. 15. Februar 2012
- Wort, Beer, Beer-based Beverages. Januar 2013
- Würze Bier Biermischgetränke. 2002, vol. II